(19) Europäisches Patentamt
European Patent Office
Office européen des brevets

(11) Publication number: **0 069 573**
**B1**

(12) # EUROPEAN PATENT SPECIFICATION

(45) Date of publication of patent specification: **24.04.85**

(51) Int. Cl.$^4$: **A 01 N 25/04,** A 01 N 47/40, D 21 C 9/00, C 02 F 1/50

(21) Application number: **82303516.7**

(22) Date of filing: **05.07.82**

(54) **Improved aqueous dispersion microbiocide composition containing methylene bis(thiocyanate).**

(30) Priority: **06.07.81 US 280567**

(43) Date of publication of application:
**12.01.83 Bulletin 83/02**

(45) Publication of the grant of the patent:
**24.04.85 Bulletin 85/17**

(84) Designated Contracting States:
**AT BE CH DE FR GB IT LI LU NL SE**

(56) References cited:
**GB-A-1 157 883**
**GB-A-1 321 404**
**US-A-3 996 378**
**US-A-4 147 681**

**CHEMICAL ABSTRACTS, vol. 95, no. 11, 14th September 1981, page 188, no. 92347f, Columbus, Ohio, USA**

(73) Proprietor: **MERCK & CO. INC.**
**126, East Lincoln Avenue P.O. Box 2000**
**Rahway New Jersey 07065 (US)**

(72) Inventor: **Weber, George A.**
**151 Fulton Street Clark**
**New Jersey 07066 (US)**
Inventor: **Pettebone, Russel H.**
**31 Poplar Place**
**Fanwood New Jersey 07023 (US)**
Inventor: **D'Errico, Michael J.**
**3018 Herald Crescent**
**Flossmoor Illinois 60422 (US)**

(74) Representative: **Crampton, Keith John Allen et al**
**D YOUNG & CO 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 069 573 B1

**Description**

The present invention is concerned with aqueous dispersion microbiocide compositions containing methylene bis(thiocyanate), also called MBT.

Methylene bis(thiocyanate) has been for some time and continues to be a widely used antimicrobial agent. It has a broad spectrum of activity against bacteria and fungi and has been found to be extremely effective at low cost levels. As a consequence, it is especially useful as an agent for controling slime-producing organisms in pulp and paper mill systems and in cooling water systems.

Hitherto, the antimicrobial agent methylene bis(thiocyanate) has been made up and applied essentially in the form of an organic solvent solution. Problems of toxicity and environmental contamination and other problems resulting from the use of such organic solvents has led to a search for a satisfactory aqueous dispersion of methylene bis(thiocyanate). Such an aqueous dispersion must be stable, that is, the methylene bis(thiocyanate) must not settle out of the dispersion, Also, it is preferable to have an aqueous dispersion which can be handled by pumping equipment which is frequently employed without degradation of the aqueous dispersion.

Such an aqueous dispersion of methylene bis(thiocyanate) is described in U.S. Patent No. 3,996,378, which discloses a water-based formulation of methylene bis(thiocyanate) in a xanthan gel. However, this dispersion has been found to lack sustained stability, and on standing has been found difficult to pump without preliminary agitation.

Parran U.S. Patent No. 3,761,417 describes detergent compositions containing particle deposition enhancing agents in which antimicrobial agents and certain cationic polymers are combined with a surfactant. However, methylene bis(thiocyanate) is not described as a suitable antimicrobial agent for use in the detergent composition, and the improved aqueous dispersion composition containing methylene bis(thiocyanate) of the present invention is not described or suggested in this patent.

The present invention provides a microbiocidal aqueous dispersion comprising from 5 to 25% by weight of methylene bis(thiocyanate); from 0.75 to 3.0% by weight of a self-inverting emulsion of a copolyampholyte of the formula:

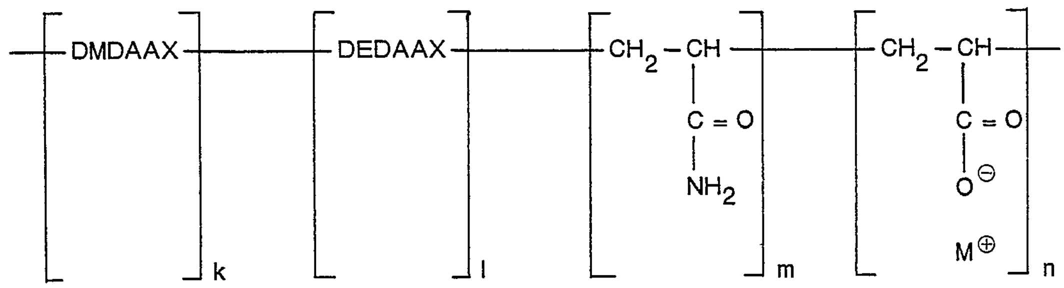

(I)

where

DMDAAX is a polymer unit resulting from monomeric dimethyldiallylammonium $X^{\ominus}$;

DEDAAX is a polymer unit resulting from monomeric diethyldiallylammonium $X^{\ominus}$;

$X^{\ominus}$ is an anion;

$M^{\oplus}$ is hydrogen; ammonium; sodium; or potassium;

*k* and *l* are numbers such that, in the copolyampholyte, the amount of $DMDAAX^{\ominus}$ is from 45 to 48 weight % and the amount of $DEDAAX^{\ominus}$ is from 2 to 5 weight %, the said amounts together totalling 50 weight %;

*m* and *n* are numbers such that, in the copolyampholyte, the amount of

$$-CH_2-CH-CO-NH_2$$

is from 45 to 50 weight % and the amount of

$$-CH_2-CH-COOM$$

is from 0 to 5 weight %, the said amounts totalling 50%, the copolyampholyte having a molecular weight greater than $1 \times 10^6$; and from 5.0 to 15.0% by weight of a suspension-improving and viscosity-improving inorganic substance in the form of colloidally fine particles.

Also in accordance with the present invention water contaminated with microbes, that is, bacteria, fungi and/or algae, is treated by incorporating it in at least a microbiocidal amount of a microbiocidal aqueous dispersion composition of the present invention. This method is especially applicable to inhibiting the growth of slime-forming bacteria and fungi encountered in pulp and paper mill systems by bringing such bacteria or fungi into contact with at least a microbiocidal amount of the composition of the present

invention, particularly by incorporating the microbiocidal composition into the mass of fiber and water in such a pulp and paper mill system.

The present invention, in contra distinction in particular to U.S. Patent No. 3,996,378, achieves an aqueous dispersion of methylene bis(thiocyanate) through the use of particular copolyampholyte in the form of a self-inverting emulsion, and a suspension-improving and viscosity-improving inorganic substance in the form of colloidally fine particles. These ingredients have been found to provide a stable aqueous dispersion, that is, one from which the methylene bis(thiocyanate) does not settle. This stable aqueous dispersion composition is also readily pumpable. A number of other polymeric compositions have been evaluated, for example, carboxymethyl cellulose, hydroxyethyl cellulose, and polyvinyl alcohol, but none of these has a given stable aqueous dispersion of methylene bis(thiocyanate).

The stable aqueous dispersion microbiocide composition containing methylene bis(thiocyanate) achieved with the present invention thus offers particular advantages in the areas of preferred use. The use of an aqueous dispersion overcomes the disadvantages inherent in the use of organic solvents to dispense the methylene bis(thiocyanate), that is, these organic solvents are both toxic and flammable. The stability of the aqueous dispersion of the present invention ensures that the methylene bis(thiocyanate) will be dispensed efficiently, that is, in effective but economic amounts, and that there will be no settling out of particles which can create blockages in the dispensing apparatus. The aqueous dispersion microbiocide composition of the present invention also offers the important advantage of being readily pumpable, that is, it can be transported and dispensed by commonly employed pumping means without experiencing problems such as excessive viscosity, either during pumping or initially after standing, which would require that the dispersion be agitated before pumping could take place.

Since the present invention concerns an aqueous dispersion microbiocide composition containing methylene bis(thiocyanate), a water-insoluble material, it will be appreciated that the particle size distribution of the methylene bis(thiocyanate) is of some importance. Generally, at least 99.0% of the particles should be less than 75 micrometers (μm) in size, with no more than 0.1% of the total particles greater than 150 μm in size. In a preferred embodiment, the methylene bis(thiocyanate) is reduced in a homogenizer and the wet particles are screened so that a maximum of 0.1% is collected on a 100 mesh screen (U.S. Standard Testing Sieves), while a minimum of 99.0% passes through a 200 mesh screen. This corresponds to a particle size of greater than 150 μm for the 100 mesh screen, and less than 75 μm for the 200 mesh screen. In another preferred embodiment, the methylene bis(thiocyanate) is reduced in a colloid mill. The particle size distribution for three batches processed through such a colloid mill, were found to be as follows:

| Sieve Size: | On 100 mesh | On 200 mesh | Through 200 mesh |
|---|---|---|---|
| μm Size: | > 150 | > 75 | ⩽ 75 |
| Specification: | max. 0.1% | – | min. 99.0% |
| Batch No. | | | |
| 1 | 0.01% | 1.10% | 98.89% |
| 2 | 0.01% | 0.75% | 99.24% |
| 3 | trace | 0.16% | 99.84% |

Various means can be employed to achieve the desired particle size range. For example, various colloid mills and homogenizers which are commonly available may be employed. Satisfactory results have been achieved using a Tekmar Super Dispax® SD 45N homogenizer at high speed for three minutes, as well as a Speco Colloid Mill®.

In the improved aqueous dispersion microbiocide composition of the present invention the particles of mehtylene bis(thiocyanate) are dispersed in an aqueous composition containing two components, the first of which is a copolyampholyte in the form of a self-inverting emulsion. The methylene bis(thiocyanate) is incorporated in an amount of from 5.0 to 25.0% by weight, based on the total weight of the aqueous dispersion. The upper limit of the amount of methylene bis(thiocyanate) which may be incorporated is determined essentially only by the amount which it is physically possible to incorporate into the aqueous dispersion composition consistent with maintaining stability of the dispersion. The lower limit of the amount of methylene bis(thiocyanate) which may be incorporated is determined by the economic practicalities involved in marketing a composition of very low active ingredient concentration. A preferred concentration of methylene bis(thiocyanate) in the aqueous dispersion microbiocide composition of the present invention is 10% by weight, based on the total weight of the composition.

The copolyampholyte self-inverting emulsion is incorporated in an amount of from 0.75 to 3.0% by weight, based on the total weight of the aqueous dispersion. It has been found that amounts below 0.75% do not give a stable dispersion, while amounts above 3.0% result in a dispersion which is too viscous.

The copolyampholyte employed in the improved aqueous dispersion of the present invention may be represented by the following general formula:

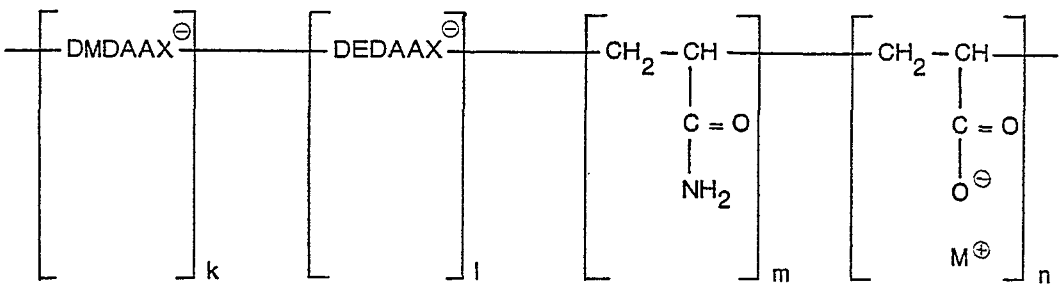

(I)

where

DMDAAX$^{\ominus}$ is a polymer unit resulting from monomeric dimethyldiallylammonium X$^{\ominus}$;

DEDAAX$^{\ominus}$ is a polymer unit resulting from monomeric diethyldiallylammonium X$^{\ominus}$;

X$^{\ominus}$ is an anion;

M$^{\oplus}$ is hydrogen; ammonium; sodium; or potassium;

*k* and *l* are numbers such that the amount of DMDAAX$^{\ominus}$ is from 45 to 48 weight % and the amount of DEDAAX$^{\ominus}$ is from 2 to 5 weight %, the said amounts together totalling 50 weight %; and

*m* and *n* are numbers such that the amount of

$$-CH_2-CH-CO-NH_2$$

is from 45 to 50 weight % and the amount of

$$-CH_2-CH-COOM$$

is from 0 to 5 weight %, the said amounts totalling 50%, the copolyampholyte having a molecular weight greater than $1 \times 10^6$.

Any anion (counterion) compatible with microbiocidal use may be employed, and chloride is preferred. Other suitable anions include acetate, citrate, formate, glycolate, lactate, nitrate, oxalate, propionate, sulfate, and other halides, for example.

Preferred polymer compositions of Formula I are those in which X$^{\ominus}$ is chloro, the amount of DMDAAX is 47.5 weight %, the amount of DEDAAX is 2.5 weight %; and the amount of

$$-CH_2-CHCONH_2$$

is 47.64 weight % and the amount of

$$-CH_2-CH-COOM$$

is 2.36 weight %, giving a copolyampholyte having repeating units of dimethyldiallylammonium chloride (DMDAAC), diethyldiallylammonium chloride (DEDAAC), acrylamide (AM), and acrylic acid (AA), or the amount of

$$-CH_2-CHCONH_2$$

is 50 weight %, giving a copolyampholyte having repeating units of dimethyldiallylammonium chloride (DMDAAC), diethyldiallylammonium chloride (DEDAAC), and acrylamide (AM). These preferred polymer compositions may be illustrated as follows, with proportions as parts by weight:

| | | | | | | | |
|---|---|---|---|---|---|---|---|
| (1) | DMDAAC | / | DEDAAC | / | AM | / | AA |
| | 190 | | 10 | | 191 | | 9 |
| (2) | DMDAAC | / | DEDAAC | / | AM | | |
| | 190 | | 10 | | 200 | | |

Preparation of these copolyampholytes, particularly in the form of self-inverting emulsions, is described in U.S. Pat. Nos. 4,077,930 and 4,147,681.

The second component used to disperse the methylene bis(thiocyanate) in order to form the improved aqueous dispersion microbiocide composition of the present invention is a suspension and viscosity improving inorganic substance in the form of colloidally fine particles. Suitable materials are clays, such as colloidal attapulgite clay and kaolin clay, and silica. A preferred inorganic substance is colloidal attapulgite clay, for example, X—1925 clay from Engelhard Industries. The suspension and viscosity improving inorganic substance is incorporated in an amount of 5.0 to 15.0% by weight, based on the total weight of the aqueous dispersion.

In addition to the methylene bis(thiocyanate) active ingredient, self-inverting emulsion of copolyampholyte and inorganic substance in the form of colloidally fine particles, the aqueous dispersion microbiocide composition of the present invention also contains a number of additional ingredients or excipients which are useful in producing a final aqueous dispersion microbiocide composition having the desired properties of viscosity, freeze/thaw stability, pH, lack of foaming, and ease of addition to water systems. These additional ingredients or excipients are:

(1) 0.1 to 1.0% by weight of a wetting agent. A preferred material is Triton X—100® available from Rohm & Haas. The wetting agent is a processing aid employed to facilitate initial dispersion of the methylene bis(thiocyanate) particles in water, which is the first step of preparing the aqueous dispersion microbiocide composition of the present invention.

(2) 0.1 to 1.0% by weight of a defoaming agent. A preferred material is Colloid 691 from Colloids, Inc. The defoaming agent prevents excessive foaming of the wetting agent during processing, and also when the aqueous dispersion microbiocide composition is added to an agitated water system, for example, that in a pulp and paper mill system.

(3) 2.0 to 5.0% by weight of a freeze/thaw stabilizing agent, such as propylene glycol; and

(4) sufficient acid to give a final pH in the aqueous dispersion microbiocide composition of from 2.0 to 3.0. Any acid compatible with the overall aqueous dispersion microbiocide composition and with the end treatment environment may be used. Organic acids are preferred, especially acetic acid and formic acid. The acid functions to lend stability to the methylene bis(thiacyanate), which may tend to hydrolyze at alkaline pH's.

The carrier for the aqueous dispersion microbiocide composition of the present invention is, of course, water, and this is present in an amount of from 50.0 to 87.0%, preferably 70.0 to 80.0% by weight.

The improved aqueous dispersion microbiocide composition of the present invention will inhibit the growth of bacteria and fungi in concentrations of 9 to 90 ppm. It is particularly useful at these concentrations for inhibiting the growth of slime-forming bacteria and fungi usually encountered in pulp and paper mill systems and cooling water systems. For example, the aqueous dispersion microbiocide composition can be added to the paper mill white water or stock system at 1.09 to 10.9 fl oz. per 100 gal. (8.5 to 85 ppm by volume) of treated water. Under conditions of extensive recirculation of white water, high levels of fillers in the furnish, and/or generally severe levels of potential slime-forming bacteria and fungi, dosages approaching 10.9 fl. oz./1000 gal. (85 ppm v/v) of treated water may be necessary. Under less severe conditions, lower dosages approaching 1.09 fl. oz./1000 gal. (8.5 ppm v/v) of treated water can be used.

Where the improved aqueous dispersion microbiocide composition of the present invention is employed to inhibit the growth of slime-forming bacteria and fungi usually encountered in pulp and paper mill systems, it is metered directly, by means of proportioning pumps, to a location which will ensure its uniform distribution in the mass of fiber and water, for example to the beaters, Jordan inlet, broke chests, furnish chests, save-alls, or white water tanks. Metering of the improved aqueous dispersion microbiocide composition may be on a continuous or intermittent basis, provided that the recommended dosing is attained. Where metering is intermittent, the use of automatic timers is recommended.

The following examples will serve to illustrate preparation of preferred embodiments of the improved aueous dispersion microbiocide composition of the present invention, without, however, being intended as a limitation thereof in any way. "Triton", "Mybex", "X—1925" and "Hydraid" are registered trade marks.

Example 1

| Ingredient | Amount % by weight |
|---|---|
| Water | 72.9 |
| Wetting agent (Triton X—100; Rohm & Haas) | 0.4 |
| Defoamer (Colloid 691; Colloids, Inc.) | 0.25 |
| Methylene bis(thiocyanate) (Mybex, Calgon Corp.) | 10.2* |
| Colloidal Attapulgite clay (X—1925; Engelhard Industries) | 10.0 |
| Propylene glycol | 3.75 |
| Formic acid (88% active) | 0.5 |
| Copolyampholyte: DMDAAC/DEDAAC/AM/AA (Hydraid 5504; Calgon Corp.) | 2.0 |

* Charge wet based on assay and reduce water charge accordingly.

The water is first charged to a vessel, after which there is charged and dispersed with moderate agitation, in sequence: the wetting agent and defoamer. There is then slowly charged the methylene bis(thiocyanate) and mixed until well dispersed. The methylene bis(thiocyanate) in suspension is milled for three minutes at high speed with a Tekmar Super Dispax® SD—45 homogenizer until the wet mesh particle size meets the following specifications: max. 0.1% on No. 100; min. 99.0% passes No. 200. With moderate agitation there is then charged and dispersed in sequence: the clay, propylene glycol, and formic acid. Finally, there is slowly charged the copolyampholyte and agitation is continued until a uniformly smooth dispersion is maintained.

An accelerated storage stability study of an improved aqueous dispersion microbiocide composition of the present invention prepared in the manner described in the above example was carried out by maintaining the composition at 50°C for one month. At the end of that period there was only a 3% drop in concentration of methylene bis(thiocyanate), and no separation or other physical change was observed.

Example 2

| Ingredient | Amount % by weight |
|---|---|
| Water | 73.2 |
| Wetting agent (Triton X—100; Rohm & Haas) | 0.4 |
| Defoamer (Colloid 691; Colloids, Inc.) | 0.25 |
| Methylene bis(thiocyanate) (Mybex, Calgon Corp.) | 10.2* |
| Colloidal Attapulgite clay (X—1925; Engelhard Industries) | 10.0 |
| Propylene glycol | 3.75 |
| Glacial acetic acid | 0.5 |
| Copolyampholyte: DMDAAC/DEDAAC/AM/AA (Hydraid 5504; Calgon Corp.) | 1.7 |

* Charge wet based on assay and reduce water charge accordingly.

The aqueous dispersion microbiocide composition is prepared in accordance with the procedures described in Example 1 above, except that (1) the colloidal attapulgite clay is added to the mixture before milling to reduce particle size, and (2) milling is carried out on a Speco Colloid Mill®.

**Claims**

1. A microbiocidal aqueous dispersion comprising from 5—25% by weight of methylene bis(thiocyanate); from 0.75 to 3.0% by weight of a self-inverting emulsion of a copolyampholyte of the formula:

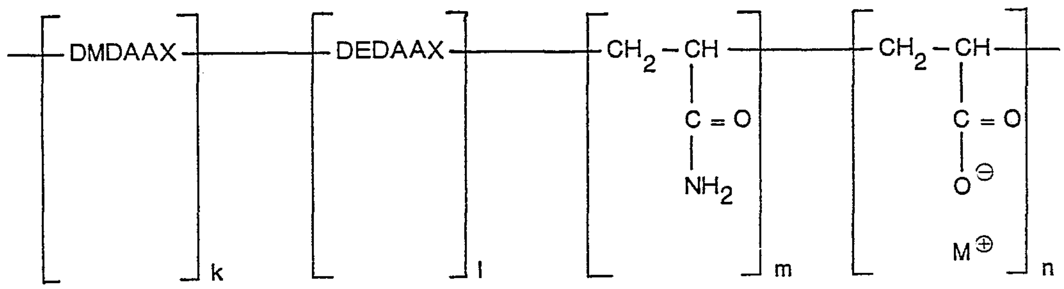

(I)

where

DMDAAX is a polymer unit resulting from monomeric dimethyldiallylammonium $X^{\ominus}$;
DEDAAX is a polymer unit resulting from monomeric diethyldiallylammonium $X^{\ominus}$;
$X^{\ominus}$ is an anion;
$M^{\oplus}$ is hydrogen; ammonium; sodium; or potassium;
*k* and *l* are numbers such that, in the copolyampholyte, the amount of $DMDAAX^{\ominus}$ is from 45 to 48 weight % and the amount of $DEDAAX^{\ominus}$ is from 2 to 5 weight %, the said amounts together totalling 50 weight %;
*m* and *n* are numbers such that, in the copolyampholyte, the amount of

$$-CH_2-\overset{|}{C}H-CO-NH_2$$

is from 45 to 50 weight % and the amount of

$$-CH_2-\overset{|}{C}H-COOM$$

is from 0 to 5 weight %, the said amounts totalling 50%, the copolyampholyte having a molecular weight greater than $1 \times 10^6$; and from 5.0 to 15.0% by weight of a suspension-improving and viscosity-improving inorganic substance in the form of colloidally fine particles.

2. A dispersion as claimed in claim 1 that additionally contains a wetting agent, a defoamer, a freeze/thaw stabilizing agent, and an acid.

3. A dispersion as claimed in claim 1 or 2 in which the amount of methylene bis(thiocyanate) is 10.0% by weight.

4. A dispersion as claimed in any one of claims 1 to 3 in which $X^-$ is chloro, the amount of DMDAAX is 47.5 weight %, the amount of DEDAAX is 2.5 weight %, the amount of

$$-CH_2-\overset{H}{\overset{|}{C}}-CONH_2$$

is 47.64 weight % and the amount of

$$-CH_2-\overset{|}{C}H-COOM$$

is 2.36 weight %.

5. A dispersion as claimed in any one of claims 1 to 3 in which $X^-$ and the amounts of DMDAAX and DEDAAX are as defined in claim 4 and the amount of

$$-CH_2-\overset{|}{C}HCONH_2$$

is 50 weight %.

6. A method of treating water contaminated with bacteria, fungi and/or algae, comprising incorporating in it at least a microbiocidal amount of a dispersion as claimed in any one of claims 1 to 5.

7. A method of inhibiting the growth of slime-forming bacteria and fungi usually encountered in pulp and paper mill systems, comprising incorporating into the mass of fiber and water in such a pulp and paper mill system so that it comes into contact with the bacteria and fungi, at least a bactericidally and fungicidally effective amount of a dispersion as claimed in any one of claims 1 to 5.

**Patentansprüche**

1. Eine mikrobiozide, wässerige Dispersion, enthaltend 5—25 Gew.-% Methylen-bis(thiocyanat); 0,75 bis 3,0 Gew.-% einer selbstumkehrenden Emulsion eines Copolyampholyten der Formel:

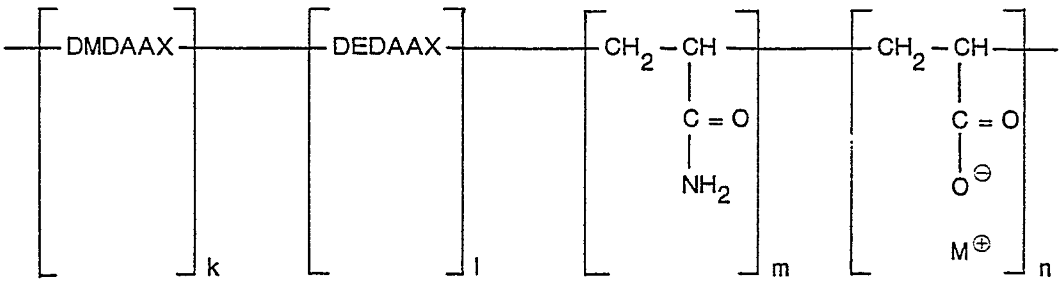
(I)

worin

DMDAAX eine aus monomerem Dimethyldiallylammonium $X^{\ominus}$ enstandene Polymereinheit ist;

DEDAAX eine aus monomerem Diethyldiallylammonium $X^{\ominus}$ enstandene Polymereinheit ist;

$X^{\ominus}$ ein Anion ist;

$M^{\oplus}$ Wasserstoff; Ammonium; Natrium oder Kalium ist;

k und l solche Zahlen sind, daß in dem Copolyampholyten die Mente an $DMDAAX^{\ominus}$ 45 bis 48 Gew.-% und die Menge an $DEDAAX^{\ominus}$ 2 bis 5 Gew.-% beträgt, wobei die genannten Mengen zusammengenommen 50 Gew.-% ausmachen; und

m und n solche Zahlen sind, daß in dem Copolyampholyten die Menge an

$$-CH_2-CH-CO-NH_2$$

45 bis 50 Gew.-% und die Menge an

$$-CH_2-CH-COOM$$

0 bis 5 Gew.-% beträgt, wobei die genannten Mengen zusammengenommen 50% ausmachen, und wobei der Copolyampholyt ein Molekulargewicht von mehr als $1 \times 10^6$ hat; und 5,0 bis 15,0 Gew.-% einer suspensionsverbessernden und viskositätsverbessernden anorganischen Substanz in der Form kolloidal feiner Teilchen.

2. Eine Dispersion wie in Anspruch 1 beansprucht, die zusätzlich ein Netzmittel, einen Entschäumer, ein Gefrier/Auftaustabilisiermittel und eine Säure enthält.

3. Eine Dispersion wie in Anspruch 1 oder 2 beansprucht, in welcher die Menge an Methylen-bis(thiocyanat) 10,0 Gew.-% beträgt.

4. Eine Dispersion wie in einem der Ansprüche 1 bis 3 beansprucht, in welcher $X^-$ Chlor ist, die Menge an DMDAAX 47,5 Gew.-% beträgt, die Menge an DEDAAX 2,5 Gew.-% beträgt, die Menge an

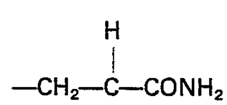

47,64 Gew.-% beträgt und die Menge an

$$-CH_2-CH-COOM$$

2,36 Gew.-% beträgt.

5. Eine Dispersion wie in einem der Ansprüche 1 bis 3 beansprucht, in welcher $X^-$ und die Mengen von DMDAAX und DEDAAX wie in Anspruch 4 definiert sind und die Menge an

$—CH_2—CHCONH_2$

50 Gew.-% beträgt.

6. Ein Verfahren zur Behandlung von mit Bakterien, Pilzen und/oder Algen verunreinigtem Wasser, umfassend die Einverleibung wenigstens einer mikrobioziden Menge einer Dispersion, wie sie in einem der Ansprüche 1 bis 5 beansprucht ist, in dieses.

7. Ein Verfahren zur Hemmung des Wuchses von schlammbildenden Bakterien und Pilzen, wie sie üblicherweise in Zellstoff- und Papierfabrikssystemen vorkommen, umfassend die Einverleibung wenigstens einer bakterizid und fungizid wirksamen Menge einer Dispersion, wie sie in einem der Ansprüche 1 bis 5 beansprucht ist, in die Fasermasse und das Wasser in solch einem Zellstoff- und Papierfabrikssystem derart, daß sie mit den Bakterien und Pilzen in Kontakt kommt.

**Revendications**

1. Dispersion aqueuse microbicide comprenant de 5 à 25% en poids de méthylène-bis(thiocyanate); de 0,75 à 3,0% en poids d'une émulsion auto-inversante d'un copolyampholyte de formule

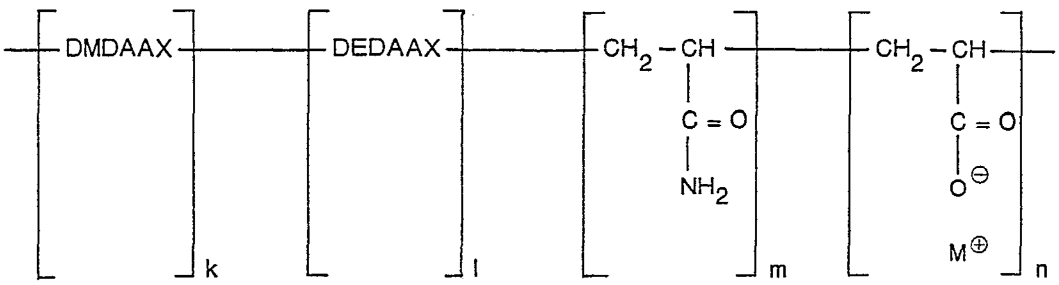

(I)

où

DMDAAX est une unité polymérique provenant du diméthyldiallylammonium monomérique $X^{\ominus}$;

DEDAAX est une unité polymerique provenant du diéthyldiallylammonium monomérique $X^{\ominus}$;

$X^{\ominus}$ est un anion;

$M^{\oplus}$ est un hdyrogène; ammonium; sodium; ou potassium;

*k* et *l* sont des nombres tels que dans le copolyampholyte la quantité de $DMDAAX^{\ominus}$ est de 45 à 48% en poids et la quantité de $DEDAAX^{\ominus}$ est de 2 à 5% en poids, lesdites quantités représentant au total 50% en poids;

*m* et *n* sont des nombres tels que dans le copolyampholyte la quantité de

$—CH_2—CH—CO—NH_2$

est de 45 à 50% en poids et la quantité de

$—CH_2—CH—COOM$

est de 0 à 5% en poids, lesdites quantités représentant au total 50%, le copolyampholyte ayant un poids moléculaire supérieur à $1 \times 10^6$; et de 5,0 à 15,0% en poids d'une substance inorganique améliorant la suspension et la viscosité sous la forme de particules colloïdalement fines.

2. Dispersion selon la revendicaton 1 qui contient en outre un agent mouillant, un antimousse, un agent de stabilisation au gel/dégel, et un acide.

3. Dispersion selon les revendicatons 1 et 2, où la quantité de méthylène-bis(thiocyanate) est de 10,0% en poids.

4. Dispersion selon l'une quelconque des revendications 1 à 3 où $X^{\ominus}$ est un chloro, la quantité de DMDAAX est de 47,5% en poids, la quantité de DEDAAX est de 2,5% en poids, la quantité de

$—CH_2—C(H)—CONH_2$

est de 47,64% en poids et la quantité de

$—CH_2—CH—COOM$

est de 2,36% en poids.

5. Dispersion selon l'une quelconque des revendications 1 à 4 où $X^{\ominus}$ et les quantités de DMDAAX et DEDAAX sont telles que définies dans la revendication 4 et la quantité de

$$\begin{array}{c} \phantom{-CH_2-}| \phantom{CONH_2} \\ -CH_2-CHCONH_2 \end{array}$$

est de 50% en poids.

6. Procédé de traitement d'eau contaminée par des bactéries, des champignons et/ou des algues, dans lequel on y incorpore au moins une quantité microbicide d'une dispersion selon l'une quelconque des revendications 1 à 5.

7. Procédé d'inhibition de la croissance de bactéries et de champignons producteurs d'humeur visqueuse que l'on rencontre généralement dans les systèmes de moulins à pâte et à papier, dans lequel on incorpore dans la masse de fibre et d'eau dans un tel système de moulin à pâte et à papier de manière qu'elle vienne en contact avec les bactéries et les champignons, au moins une quantité efficace comme bactéricide et comme fongicide d'une dispersion selon l'une quelconque des revendications 1 à 5.